# EUROPEAN PATENT SPECIFICATION

(11) **EP 1 714 550 B1**
(45) Date of publication and mention of the grant of the patent: **18.06.2008**
(21) Application number: 06250189.5
(22) Date of filing: 13.01.2006
(51) Int. Cl.: A01K 93/00

(54) **Float**
Schwimmer
Flotteur

(30) Priority: 22.02.2005 GB 0503585
(43) Date of publication of application: 25.10.2006
(73) Proprietor: Dawson, Stephen Mark, Cadbury Heath, Bristol BS30 8AT (GB)
(72) Inventor: Dawson, Stephen Mark, Cadbury Heath, Bristol BS30 8AT (GB)
(74) Representative: Hocking, Adrian Niall

(56) References cited:
- FR-A- 2 566 233
- GB-A- 294 347
- GB-A- 2 068 202
- US-A- 2 479 399
- US-A- 2 587 190

## Description

The present invention relates to an angling float, to fishing tackle using such a float, and to a method of pole fishing using a rod and reel.

Two types of angling are rod and reel, and pole fishing. Both are well known. Road and reel requires casting, and thus requires a relatively heavy float with casting weights. Pole fishing utilises an extremely long pole, often in the order of 16 metres or more, having a fixed line, i.e. no reel. Casting is not utilised when pole fishing, since the object is to present an extremely low resistance line and hook to the fish.

The use of the term 'casting weight' herein throughout is intended to mean an angler's weight ordinarily associated with casting. Examples of casting weights are split shot.

The problem associated with rod and reel angling is that, by necessarily utilising a heavy float with casting weights, a relatively high resistance line and hook is presented to the fish. As a consequence, a biting fish can often be scared away when testing the bait and discovering the unexpected resistance.

The problem associated with pole angling is that, since casting is not undertaken, despite poles of long lengths, the distance to which bait can be presented is extremely limited.

GB294347 suggests a line-float which consists of a cage-like frame through which a crow-quill slides freely. The axial movement is limited by a cork washer secured to the quill. The cage comprises a cork upper end disc, a wooden lower end disc spaced apart by wires. The line is passed through eyes and a loop and is tied to a ring at the bottom end of the quill. However, this arrangement does not allow easy casting and also presents a reasonable surplus of hanging line. The hanging line results in added weight being applied to the quill and also leads to entanglement during casting and once in the water.

The present invention seeks to solve these problems.

According to a first aspect of the present invention, there is provided an angling float comprising a heavy-float part and a light-float part slidably engaged with the heavy-tloat part, the hcavy-filoat part and the light-float part each having a line-retaining element for retaining the float on a fishing line, characterised in that the line-retaining element of the light-float part is movable to a position partway between the ends of the heavy-float part.

Preferable and/or optional features of the first aspect of the invention are set forth in claims 2 to 8, inclusive.

According to a second aspect of the invention, there is provided fishing tackle comprising an angling float in accordance with the first aspect of the invention, and a fishing line retained by the line-retaining elements of the light-float part and heavy-float part.

Preferably, the fishing tackle further comprises a casting weight as herein defined attached to the fishing line at or adjacent to the heavy-float line-retaining element, the casting weight being positioned on the fishing line so that a portion of the fishing line can slide freely through the light-float line-retaining element.

According to a third aspect of the invention, there is provided a method of pole angling using a rod and reel, the method comprising the steps of :
a) securing a fishing line to an angling float in accordance with the first aspect of the invention using the two line-retaining elements;
b) attaching one or more casting weights as herein defined to the fishing line; preventing or limiting movement of the heavy-float part along the fishing line; and allowing travel of the light-float line-retaining element along the fishing line; and
c) securing a hook to the end of the fishing line, so that, when cast, the heavy float part enables distance casting, due to the or each casting weight, and the light-float part provides low resistance hook presentation.

The present invention will now be more particularly described, by way of example only, with reference to the accompanying drawings, in which :
Figure 1 is a diagrammatic longitudinally sectioned view of a first embodiment of an angling float, in accordance with the first aspect of the invention and in a first condition;
Figure 2 is a view similar to that of Figure 1, showing the float in a second condition;
Figure 3 is a diagrammatic longitudinally sectioned view of a second embodiment of an angling float, in accordance with the first aspect of the invention and in a first condition; and
Figure 4 is a view similar to that of Figure 3, showing the float in a second condition.

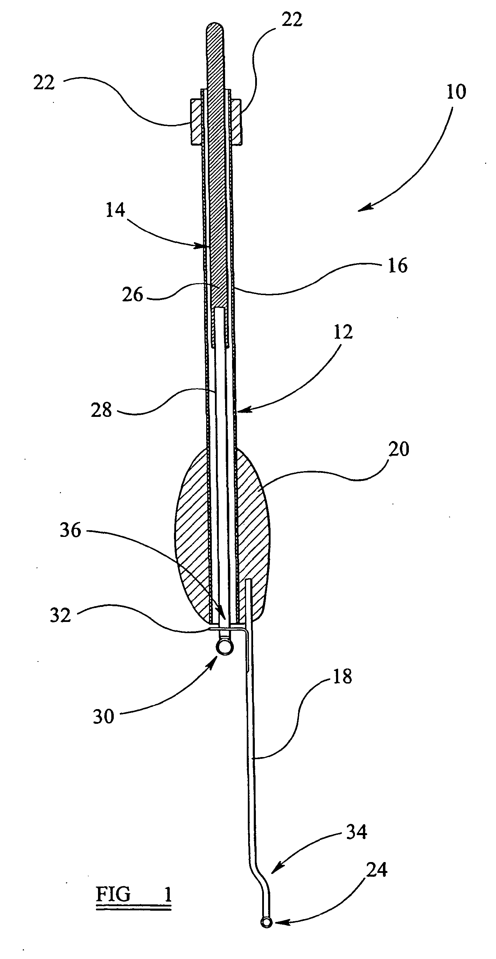

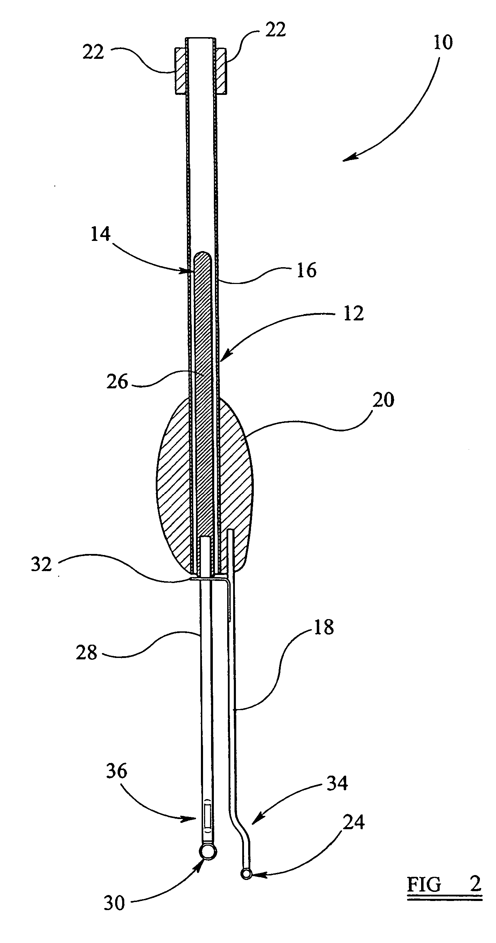

Referring firstly to Figures 1 and 2, there is shown an angling float 10 which comprises a heavy-float part 12 and a light-float part 14 slidably engaged with the heavy-float part 12. The heavy-float part 12 includes a tubular body portion 16 and an elongate heavy-float arm 18 attached to one end of the tubular portion 16. The tubular portion 16 of the heavy-float part 12 is open at both ends, and includes a main buoyancy element 20 at or adjacent to the end of the tubular portion 16 nearest the heavy-float arm 18, and a secondary buoyancy element 22 at or adjacent to the other end of the tubular portion 16.

The heavy-float arm 18 includes a line-retaining element 24 at its distal end which, in this case, is simply an eye ring.

The tubular portion 16 of the heavy-float part 12 is typically formed of plastics, and the heavy-float arm 18 is typically formed of metal. However, any other suitable material can be used.

The light-float part 14 includes an elongate float body 26 and an elongate light-float arm 28 projecting from one end of the float body 26. The float body 26 is formed of buoyancy material and is slidably received within the tubular portion 16 of the heavy-float part 12.

The light-float arm 28 also includes a line-retaining element 30 at its distal end which, in this case, is also an eye ring. The light-float arm 28 has a similar length to that of the heavy-float arm 18. When the light-float part 14 is in a fully extended condition (see Figure 2), the light-float line-retaining element 30 and the heavy-float line-retaining element 24 reside adjacent to each other. When the light-float part 14 is in a fully retracted condition (see Figure 1), the light-float line-retaining element 30 lies partway between the ends of the heavy-float part 12 and, more particularly, adjacent to the proximal end of the heavy-float arm 18.

Furthermore, when the light-float part 14 is in the fully retracted condition, the end of the float body 26, which is remote from the light-float arm 28, projects from the end of the tubular portion 16 of the heavy-float part 12. In the fully extended condition, the float body 26 is hidden within the tubular portion 16 of the heavy-float part 12.

A stop 32 is provided at or adjacent to the end of the tubular portion 16 to prevent the light-float body 26 unintentionally sliding out of the tubular portion 16 of the heavy-float part 12. The stop 32, in this case, is simply a pin which projects transversely from the heavy-float arm 18.

The heavy-float arm 18 includes a slight kink or crank 34 which spaces the heavy-float line-retaining element 24 away from the light-float arm 28. Although not clearly shown, the light-float arm 28 also includes a similar kink or crank 36 which projects transversely to the kink 34 of the heavy-float arm 18, in other words into or out of the plane of the drawing. The light-float arm kink 36 and the heavy-float arm kink 34 are adjacent to the respective light-float line-retaining element 30 and the heavy-float line-retaining element 24. The kinks 34, 36 provide spacing for attachment of weights to a line, and allow low resistance movement of the line, especially when exhibiting undesirable coiling, through the light-float line-retaining element 30.

In use, line from a reel is firstly threaded through the heavy-float line-retaining element 24 and secured in place to the heavy-float part 12. Securement is typically effected by one or more anglers weights either side of the heavy-float arm 18. One or more of these weights are typically casting weights as defmed above, although the casting weights can be alternatively, or additionally, included at a different position or positions on the line between the heavy-float line-retaining element 24 and the reel.

The line is then threaded through the light-float line-retaining element 30, and a suitable hook is attached to the end of the line. The length of line between the heavy-float line-retaining element 24 and the hook is sufficient to allow unhindered sliding movement of the light-float part 14.

Using a rod and reel, the line can be cast due to the heavy-float part 12 and the casting weights. When in the water, the light-float part 14 assumes the retracted condition, generally shown by Figure 1. The end of the light-float body 26 is visible to the user.

When a fish initially takes the hook, only the light-float part 14 is pulled. The light-float part 14 presents extremely little resistance and, together with the relatively short length of line from the heavy-float line-retaining element 24 to the hook, the fish remains unperturbed and bites fully. The user is able to see that the end of the light-float part 14 is hidden, when a fish is taking the bait, and once the light-float part 14 assumes the fully extended condition, as generally shown in Figure 2, then the heavy-float part 12 starts to bob. The fish is then secured to the hook and can be reeled in.

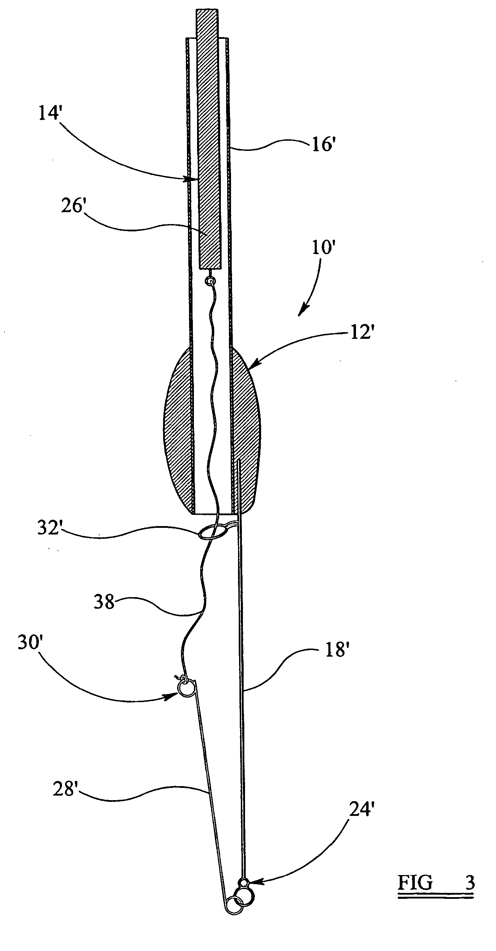

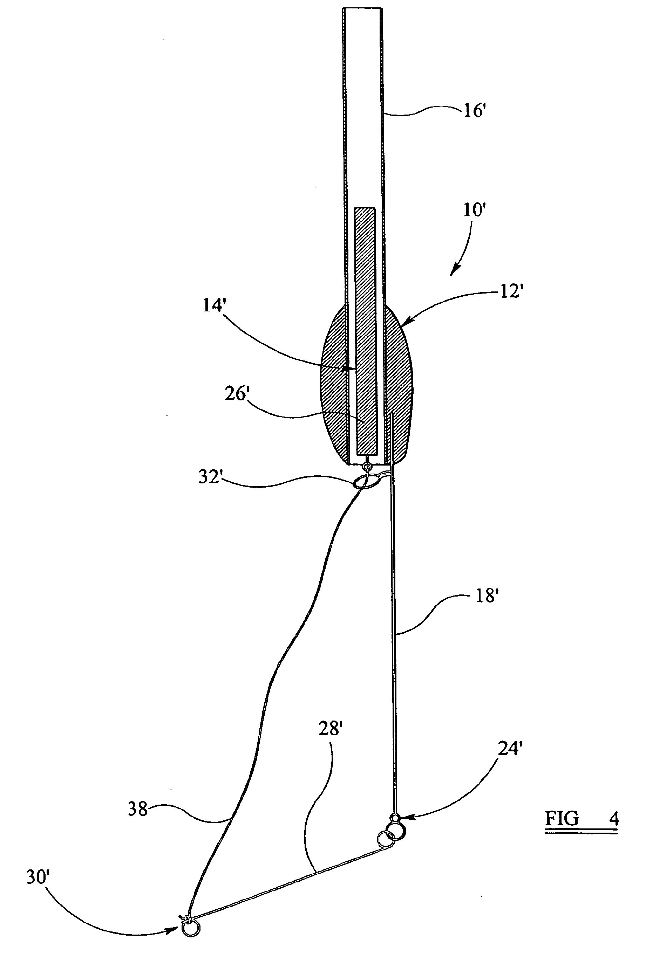

Referring now to Figures 3 and 4, a second embodiment of a float 10', according to the invention is shown. Like numbers refer to like parts, and further detailed description will be omitted.

In this embodiment, a heavy-float part 12' is substantially the same as that of the first embodiment. A light-float part 14', however, includes an elongate float body 26' received for slidable movement in a tubular portion 16' of the heavy-float part 12', a light-float arm 28' pivotably connected to the distal end of a heavy-float arm 18', and an elongate flexible element 38 coupling the light-float body 26' and the light-float arm 28' together. As such, the light-float body 26' and the light-float arm 28' are not directly engaged with each other.

One end of the light-float arm 28' is conveniently pivotably engaged with a line-retaining element 24' of the heavy-float arm 18'. One end of the elongate flexible element 38 is engaged with a line-retaining element 30' of the light-float arm 28', and the other end is engaged with one end of the light-float body 26'.

The elongate flexible element 38 is of sufficient length such that, when under tension and the light-float arm 28' is in a pivoted upwards condition (Figure 3), one end of the light-float body 26' projects from the end of the heavy-float tubular portion 16' and the light-float line-retaining element 30' lies partway between the ends of the heavy-float part 12', and, when the light-float arm 28' is in a pivoted downwards condition (Figure 4), the light-float line-retaining element 30' resides at a position which is further from the heavy-float tubular portion 16' than the heavy-float line-retaining element 24'. This downwards position of the light-float arm 28' is dependent on the length of the elongate flexible element 38 and the positioning of a stop 32' preventing the light-float body 26' from being drawn fully out of the heavy-part tubular portion 16'.

The float 10' of the second embodiment is attached to a fishing line as described above in the first embodiment. The fishing line is securely attached to the heavy-float line-retaining element 24' to retain the float 10' in position relative to the longitudinal extent of the fishing line, and the remaining length of the fishing line is passed through the light-float line-retaining element 30', and a hook is attached. As before, the length of line from the heavy-float line-retaining element 24' to the hook is free to move through the light-float line-retaining element 30'.

Casting weights are used on the fishing line to enable casting and, preferably, attachment of the fishing line to the heavy-float line-retaining element 24'. Once in the water and with the hook freely suspended, the light-float part 14' assumes the first condition with the light-float arm 28' upwards. Due to the low-resistance of the light-float part 14', when a fish first tests the hook and tugs, the light-float arm 28' simply moves downwards to take up the second position. Downwards movement of the light-float arm 28' causes the light-float body 26', via the elongate flexible element 38, to be drawn downwards along the tubular portion 16' of the heavy-float part 12'. This extremely low resistance movement encourages the fish to take a more secure bite, whilst indicating to the angler that a fish is interested. Once the stop 32' is reached by the light-float body 26', the heavy-float part 12' starts to bob, indicating that the fish has taken a firmer bite and can be reeled in.

The flexible elongate element of the light-float part is a short length of fishing line. However, any other suitable material can be utilised. The length of the flexible elongate body can be set by a user, and may permit full or only partial extension of the light-float arm.

Although the line-retaining elements described above are preferably eyes, the line-retaining element of the heavy-float part may be any arrangement which allows stationary attachment or fixing of the fishing line to the heavy-float part.

The light-float arm and the heavy-float arm are preferably formed of metal. However, plastics can be used. Coated wood is less preferable due to a higher degree of friction.

It is therefore possible to provide a float which allows an angler to use a rod and reel in place of a pole. It is also possible to provide a float which allows casting while presenting an extremely low resistance hook.

## Claims

1. An angling float (10;10') comprising :
a heavy-float part (12;12') and
a light-float part (14;14') slidably engaged with the heavy-float part (12;12'), the heavy-float part (12;12') and the light-float part (14;14') each having a line-retaining element (24,30;24',30') for retaining the float (10;10') on a fishing line, **characterised in that**
the line-retaining element (30;30') of the light-float part (14;14') is movable to a position partway between the ends of the heavy-float part (12;12').

2. A float as claimed in claim 1, wherein the light-float part (14;14') is at least in part slidably received within the heavy-float part (12;12').

3. A float as claimed in claim 1 or claim 2, wherein, when the light-float line-retaining element (30;30') is fully retracted relative to the heavy-float line-retaining element (24;24'), the end of the light-float part (14;14') opposite the light-float line-retaining element (30;30') is visible, and when the light-float line-retaining element (30;30') is fully extended relative to the heavy-float line-retaining (24;24'), the end of tlight-float part (14;14') opposite the light-float line-retaining element (30;30') is hidden.

4. A float as claimed in any one of the preceding claims, wherein the heavy-float part (12;12') includes a tubular portion (16;16') and a heavy-float arm (18;18') which extends from the tubular portion (16;16'), at least part of the light-float part (14;14') being slidable within the tubular portion (16;16') of the heavy-float part (12;12'), and the heavy-float line-retaining element (24;24') being positioned at the end of the heavy-float arm (18;18').

5. A float as claimed in any one of the preceding claims, wherein, when the light-float part (14) is fully extended, the two line-retaining elements (24, 30) are adjacent to each other.

6. A float as claimed in any one of the preceding claims, wherein the light-float part (14) includes a buoyant float body (26) and a light-float arm (28) which extends from one end of the float body (26), the light-float line-retaining element (30) being positioned at the end of the light-float arm (28).

7. A float as claimed in any one of claims 1 to 4, wherein the light-float part (14') includes a buoyant float body (26'), and a light-float arm (28') coupled to or adjacent to one end to the float body (26') by an elongate flexible element (38), and pivotably connected at or adjacent to the other end to the heavy-float part (12').

8. A float as claimed in claim 7, wherein, when the light-float part (14') is fully extended, the light-float line-retaining element (30') extends beyond the heavy-part line-retaining element (24').

9. Fishing tackle comprising an angling float (10;10') as claimed in any one of the preceding claims, and a fishing line retained by the line-retaining elements (24, 30;24',30') of the light-float part (14;14') and heavy-float part (12;12').

10. Fishing tackle as claimed in claim 9, further comprising a casting weight as herein defined attached to the fishing line at or adjacent to the heavy-float line-retaining element (24;24'), the casting weight being positioned on the fishing line so that a portion of the fishing line can slide freely through the light-float line-retaining element (30;30').

11. A method of pole angling using a rod and reel, the method comprising the steps of:
a) securing a fishing line to an angling float (10;10') as claimed in any one of claims 1 to 8 using the two line-retaining elements (24,30;24',30');
b) attaching one or more casting weights as herein defined to the fishing line; preventing or limiting movement of the heavy-float part (12;12') along the fishing line; and allowing travel of the light-float line-retaining element (30;30') along the fishing line; and
c) securing a hook to the end of the fishing line, so that, when cast, the heavy float part enables distance casting, due to the or each casting weight, and the light-float part (14;14') provides low resistance hook presentation.

## Patentansprüche

1. Angelschwimmer (10; 10'), der Folgendes umfasst:
einen Schwerschwimmerteil (12; 12') und
einen Leichtschwimmerteil (14; 14'), der verschiebbar mit dem Schwerschwimmerteil (12; 12') in Eingriff gebracht ist, wobei der Schwerschwimmerteil (12; 12') und der Leichtschwimmerteil (14; 14') jeweils ein Schnurhalteelement (24, 30; 24', 30') haben, um den Schwimmer (10; 10') an einer Angelschnur zu halten, **dadurch gekennzeichnet, dass**
das Schnurhalteelement (30; 30') des Leichtschwimmerteils (14; 14') zu einer Position auf halbem Wege zwischen den Enden des Schwerschwimmerteils (12; 12') bewegt werden kann.

2. Schwimmer nach Anspruch 1, wobei der Leichtschwimmerteil (14; 14') wenigstens zum Teil verschiebbar innerhalb des Schwerschwimmerteils (12; 12') aufgenommen wird.

3. Schwimmer nach Anspruch 1 oder Anspruch 2, wobei, wenn das Leichtschwimmer-Schnurhalteelement (30; 30') im Verhältnis zu dem Schwerschwimmer-Schnurhalteelement (24; 24') vollständig eingefahren ist, das dem Leichtschwimmer-Schnurhalteelement (30; 30') gegenüberliegende Ende des Leichtschwimmerteils (14; 14') sichtbar ist, und wenn das Leichtschwimmer-Schnurhalteelement (30; 30') im Verhältnis zu dem Schwerschwimmer-Schnurhalteelement (24; 24') vollständig ausgefahren ist, das dem Leichtschwimmer-Schnurhalteelement (30; 30') gegenüberliegende Ende des Leichtschwimmerteils (14; 14') verborgen ist.

4. Schwimmer nach einem der vorhergehenden Ansprüche, wobei der Schwerschwimmerteil (12; 12') einen röhrenförmigen Abschnitt (16; 16') und einen Schwerschwimmer-Arm (18; 18'), der sich von dem röhrenförmigen Abschnitt (16; 16') aus erstreckt, einschließt, wobei wenigstens ein Teil des Leichtschwimmerteils (14; 14') innerhalb des röhrenförmigen Abschnitts (16; 16') des Schwerschwimmerteils (12; 12') verschoben werden kann und das Schwerschwimmer-Schnurhalteelement (24; 24') am Ende des Schwerschwimmer-Arms (18; 18') angeordnet ist.

5. Schwimmer nach einem der vorhergehenden Ansprüche, wobei, wenn der Leichtschwimmerteil (14) vollständig ausgefahren ist, die zwei Schnurhalteelemente (24, 30) einander benachbart sind.

6. Schwimmer nach einem der vorhergehenden Ansprüche, wobei der Leichtschwimmerteil (14) einen Auftriebsschwimmerkörper (26) und einen Leichtschwimmer-Arm (28), der sich von einem Ende des Schwimmerkörpers (26) aus erstreckt, einschließt, wobei das Leichtschwimmer-Schnurhalteelement (30) am Ende des Leichtschwimmer-Arms (28) angeordnet ist.

7. Schwimmer nach einem der Ansprüche 1 bis 4, wobei der Leichtschwimmerteil (14') einen Auftriebsschwimmerkörper (26') und einen Leichtschwimmer-Arm (28'), der durch ein längliches flexibles Element (38) an ein Ende des Schwimmerkörpers (26') gekoppelt ist oder daran angrenzt und an oder benachbart dem anderen Ende schwenkbar mit dem Schwerschwimmerteil (12') verbunden ist, einschließt.

8. Schwimmer nach Anspruch 7, wobei, wenn der Leichtschwimmerteil (14') vollständig ausgefahren ist, sich das Leichtschwimmer-Schnurhalteelement (30') über das Schwerteil-Schnurhalteelement (24') hinaus erstreckt.

9. Angelgerät, das einen Angelschwimmer (10; 10') nach einem der vorhergehenden Ansprüche und eine durch die Schnurhalteelemente (24, 30; 24', 30') des Leichtschwimmerteils (14; 14') und des Schwerschwimmerteils (12; 12') gehaltene Angelschnur umfasst.

10. Angelgerät nach Anspruch 9, das ferner ein Wurfgewicht, wie hierin definiert, umfasst, das an der Angelschnur oder angrenzend an das Schwerschwimmer-Schnurhalteelement (24; 24') befestigt ist, wobei das Wurfgewicht so an der Angelschnur angeordnet ist, dass ein Abschnitt der Angelschnur frei durch das Leichtschwimmer-Schnurhalteelement (30; 30') gleiten kann.

11. Verfahren zum Rutenangeln unter Verwendung einer Rute und einer Rolle, wobei das Verfahren die folgenden Schritte umfasst:
a) Befestigen einer Angelschnur an einem Angelschwimmer (10; 10') nach einem der Ansprüche 1 bis 8 unter Verwendung der zwei Schnurhalteelemente (24, 30; 24', 30'),
b) Befestigen eines oder mehrerer Wurfgewichte, wie hierin definiert, an der Angelschnur, wobei eine Bewegung des Schwerschwimmerteils (12; 12') längs der Angelschnur verhindert oder begrenzt wird und eine Fahrt des Leichtschwimmer-Schnurhalteelements (30; 30') längs der Angelschnur ermöglicht wird, und
c) Befestigen eines Hakens am Ende der Angelschnur, so dass, wenn sie geworfen wird, der Schwerschwimmerteil, auf Grund des oder jedes Wurfgewichts, ein Distanzwerfen ermöglicht und der Leichtschwimmerteil (14; 14') eine Hakendarbietung mit geringem Widerstand gewährleistet.

## Revendications

1. Flotteur de pêche (10; 10'), comprenant:
une partie lourde du flotteur (12; 12'); et
une partie légère du flotteur (14; 14') engagée de manière coulissante dans la partie lourde du flotteur (12; 12'), la partie lourde du flotteur (12; 12') et la partie légère du flotteur (14; 14') comprenant chacune un élément de retenue de la ligne (24, 30; 24', 30') pour retenir le flotteur (10; 10') sur une ligne de pêche; **caractérisé en ce que**
l'élément de retenue de la ligne (30; 30') de la partie légère du flotteur (14; 14') peut être déplacé vers une position située en partie entre les extrémités de la partie lourde du flotteur (12; 12').

2. Flotteur selon la revendication 1, dans lequel la partie légère du flotteur (14; 14') est au moins partiellement reçue de manière coulissante dans la partie lourde du flotteur (12; 12').

3. Flotteur selon les revendications 1 ou 2, dans lequel, lorsque l'élément de retenue de la ligne de la partie légère du flotteur (30; 30') est complètement rétracté par rapport à l'élément de retenue de la ligne de la partie lourde du flotteur (24; 24'), l'extrémité de la partie légère du flotteur (14; 14') opposée à l'élément de retenue de la ligne de la partie légère du flotteur (30; 30') est visible, et lorsque l'élément de retenue de la ligne de la partie légère du flotteur (30; 30') est complètement étendu par rapport à l'élément de retenue de la ligne de la partie lourde du flotteur (24; 24'), l'extrémité de la partie légère du flotteur (14; 14') opposée à l'élément de retenue de la ligne de la partie légère du flotteur (30; 30') est cachée.

4. Flotteur selon l'une quelconque des revendications précédentes, dans lequel la partie lourde du flotteur (12; 12') englobe une partie tubulaire (16; 16') et un bras de flotteur lourd (18; 18'), s'étendant à partir de la partie tubulaire (16; 16'), au moins une partie de la partie légère du flotteur (14; 14') pouvant glisser dans la partie tubulaire (16; 16') de la partie lourde du flotteur (12; 12'), et l'élément de retenue de la ligne de la partie lourde du flotteur (24; 24') étant positionné au niveau de l'extrémité du bras du flotteur lourd (18; 18').

5. Flotteur selon l'une quelconque des revendications précédentes, dans lequel, lorsque la partie légère du flotteur (14) est complètement étendue, les deux éléments de retenue de la ligne (24, 30) sont adjacents l'un à l'autre.

6. Flotteur selon l'une quelconque des revendications précédentes, dans lequel la partie légère du flotteur (14) englobe un corps de flotteur porteur (26) et un bras de flotteur léger (28) s'étendant à partir d'une extrémité du corps du flotteur (26), l'élément de retenue de la ligne de la partie légère du flotteur (30) étant positionné au niveau de l'extrémité du bras du flotteur léger (28).

7. Flotteur selon l'une quelconque des revendications 1 à 4, dans lequel la partie légère du flotteur (14') englobe un corps de flotteur porteur (26') et un bras de flotteur léger (28') accouplé à une extrémité du corps du flotteur (26') par un élément flexible allongé (38), ou adjacent à celle-ci, et connecté de manière pivotante au niveau de l'autre extrémité ou près de celle-ci à la partie lourde du flotteur (12').

8. Flotteur selon la revendication 7, dans lequel, lors de l'extension complète de la partie légère du flotteur (14'), l'élément de retenue de la ligne de la partie légère du flotteur (30') s'étend au-delà de l'élément de retenue de la ligne de la partie lourde du flotteur (24').

9. Attirail de pêche, comprenant un flotteur de pêche (10; 10') selon l'une quelconque des revendications précédentes, et une ligne de pêche retenue par les éléments de retenue de la ligne (24, 30; 24'; 30') de la partie légère du flotteur (14; 14') et de la partie lourde du flotteur (12; 12').

10. Attirail de pêche selon la revendication 9, comprenant en outre un poids de lancer, comme défini ci-dessus, fixé sur la ligne de pêche au niveau de l'élément de retenue de la ligne de la partie lourde du flotteur (24,24') ou près de celui-ci, le poids de lancer étant positionné sur la ligne de pêche de sorte qu'une partie de la ligne de pêche peut glisser librement à travers l'élément de retenue de la ligne de la partie légère du flotteur (30; 30).

11. Procédé de pêche à la perche utilisant une canne et un moulinet, le procédé comprenant les étapes ci-dessous :
a) fixation d'une ligne de pêche à un flotteur de pêche (10, 10') selon l'une quelconque des revendications 1 à 8, utilisant les deux éléments de retenue de la ligne (24, 30; 24', 30')
b) fixation d'un ou de plusieurs poids de lancer, comme défini ci-dessus, sur la ligne de pêche; empêchement ou limitation du déplacement de la partie lourde du flotteur (12; 12') le long de la ligne de pêche; et autorisation du déplacement de l'élément de retenue de la ligne de la partie légère du flotteur (30; 30') le long de la ligne de pêche; et
c) fixation d'un hameçon sur l'extrémité de la ligne de pêche, de sorte qu'après le lancer, la partie lourde du flotteur permet un lancer à distance, par suite du ou de chaque poids de lancer, la partie légère du flotteur (14; 14') assurant une présentation de l'hameçon à résistance réduite.
